# EUROPEAN PATENT APPLICATION

(11) **EP 3 340 079 A1**
(43) Date of publication of application: **27.06.2018**
(21) Application number: 17208701.7
(22) Date of filing: 19.12.2017
(51) Int. Cl.: G06F 17/30

(54) **DATA PROMOTION**

(30) Priority: 20.12.2016 US 201662436961 P; 15.03.2017 US 201715459843
(71) Applicant: Palantir Technologies Inc., Palo Alto, CA 94301 (US)
(72) Inventor: Chang, Allen, Palo Alto, CA California 94301 (US); Tibshirani, Julie, Palo Alto, CA California 94301 (US); Freiberg, Stephen, Palo Alto, CA California 94301 (US); Gordeeva, Tatyana, Palo Alto, CA California 94301 (US); Wilson, Timothy, Palo Alto, CA California 94301 (US)
(74) Representative: Dendorfer, Claus

(57) **Abstract**

Example embodiments relate to a network-based ontology curation system employed for receiving a request to view a data object, curating an ontology associated with the data object on-the-fly based on attributes of the request that include device and user characteristics.

## Description

### PRIORITY APPLICATION

This application claims priority to U. S. Provisional Application Serial Number 62/436,961, filed December 20, 2016, the disclosure of which is incorporated herein in its entirety by reference.

### TECHNICAL FIELD

The present disclosure generally relates to the technical field of special-purpose machines that facilitate the curation and management of data sets, including computerized variants of such special-purpose machines and improvements to such variants, and to the technologies by which such special-purpose machines become improved compared to other special-purpose machines that facilitate integration of spreadsheet data. In particular, the present disclosure addresses systems and methods for the curation, management, and presentation of one or more data sets into one or more network applications.

### BACKGROUND

Computer-based data systems, such as relational database management systems, typically organize data sets according to a fixed structure of tables and relationships. The structure may be described using an ontology, embodied in a database schema, comprising a data model that is used to represent the structure and reason about objects in the structure.

An ontology is a fixed data structure that defines a set of tables and relationships between those tables. Ontologies therefore define a set of concepts and relationships that represent the content and structure of a data set embodied as a database schema. Thus, an ontology of a database is normally fixed at the time that the database is created; any change to the ontology represented by the schema is extremely disruptive to the database system, and may require user intervention by an administrator to modify tables or relationships, or to create new tables or relationships.

However, the volume of data in high-scale datasets are cumbersome to store, manage and curate in a structure described using an ontology. High-scale data sets may include sensor data received from one or more sensors. Sensor data can generally be presented as a time series, such that each data point from the sensor includes a timestamp as well as metadata that may indicate a source of the data point (e.g., an identifier of a sensor). Sensor data is generally collected in real-time, over extended periods of time. As a result, high-scale data sets may comprise growing volumes of data that require vast storage space.

The inflexibility of a typical database ontology therefore presents a set of unique technical challenges when attempts are made to curate ontologies based on specifications and requirements and when incorporating high-scale datasets.

### BRIEF DESCRIPTION OF THE DRAWINGS

Various ones of the appended drawings merely illustrate example embodiments of the present disclosure and are not intended to limit its scope to the illustrated embodiments. On the contrary, these examples are intended to cover alternatives, modifications, and equivalents as may be included within the scope of the disclosure.
FIG. 1 is a network diagram depicting a network system comprising a group of application servers in communication with a network-based ontology curation system configured for managing and curating large-scale data sets, consistent with some embodiments.
FIG. 2 is a block diagram illustrating various components of the ontology curation system, which is provided as part of the network system, consistent with some embodiments.
FIG. 3 is a flowchart illustrating a method for curating an ontology based on a prioritized set of data objects, according to some example embodiments.
FIG. 4 is a flowchart illustrating a method for promoting data from a federated data source to an ontology curation system, according to some example embodiments.
FIG. 5 is a flowchart illustrating a method for synchronizing a set of high-scale data objects, consistent with some embodiments.
FIG. 6 is an interface diagram illustrating presentations of a data object based on curated ontologies, consistent with some embodiments.
FIG. 7 is a diagrammatic representation of a machine in the example form of a computer system within which a set of instructions for causing the machine to perform any one or more of the methodologies discussed herein may be executed.

### DETAILED DESCRIPTION

Reference will now be made in detail to specific example embodiments for carrying out the inventive subject matter of the present disclosure. In the following description, specific details are set forth in order to provide a thorough understanding of the subject matter. It shall be appreciated that embodiments may be practiced without some or all of these specific details.

Example embodiments relate to a network-based ontology curation system employed for receiving a request to view a data object, curating an ontology associated with the data object, and generating and causing display of a presentation of the data object based on the curated ontology.

Computer-based database systems, such as relational database management systems, typically organize data according to a fixed structure of tables and relationships. The structure may be described using an ontology, embodied in a database schema, comprising a data model that represents the structure and reason about objects in the structure. As discussed above, an ontology is normally fixed at the time that the database is created such that any change to the ontology represented by the schema is extremely disruptive to the database system, and may require user intervention by an administrator to modify tables or relationships, or to create new tables or relationships. Thus, a system to curate ontologies may be configured to minimize changes to data by the ontology curation system.

In order to surface and present relevant data to the requesting users, the ontology curation system receives requests to view data objects, and curates ontologies of linked data associated with the data object of the request based on attributes of the request itself. In this way, the most relevant aspects of the requested data object may be presented to requesting users.

As an example, the request attributes may include a reference to a data object, or component of a data object, an identifier of the requesting device itself, as well as user attributes of a user making the request (e.g., user profile data). In response to receiving the request, the network-based ontology curation system identifies properties of the requested data object and accesses one or more databases to gather a set of data objects to include in a curated ontology associated with the data object for the requesting user. The one or more databases can include databases maintained by the network-based ontology curation system as well as federated data source databases. A federated data source can be any service external to the network-based ontology curation system that exposes read functionality (e.g., search, aggregation, object load) for data maintained by the federated data source.

The network-based ontology curation system retrieves and prioritizes data objects from the databases (e.g., databases maintained by the network-based ontology curation system and/or federated data source databases) based on the request attributes, and generates a curated ontology based on the prioritization. For example, the system may prioritize what to show and the placement of the various data objects. Separately, the underlying components for searching and applying an ontology may prioritize amongst the various data sources and/or the data from a given data source (e.g., for example, if there are duplicates, older or newer entries). In some example embodiments, the network-based ontology curation system generates and causes display of a view of the data object based on the curated ontology at a graphical user interface (GUI) at the requesting device. A format of the presentation may also be based on the request attributes.

The ontology curation system retrieves the set of data objects from a primary database maintained by the network-based ontology curation system. In one embodiment, the primary database may include identifiers, e.g., keys, pointers, addresses, or row numbers, usable to access data objects within one or more federated data source databases. An identifier may uniquely identify data in a federated data source database. In other words, the identifier in the primary database refers to data stored in the federated database.

In some example embodiments, the ontology curation system may simply be configured based on user inputs defining priorities of data objects based on request attributes. For example, the ontology curation system may receive a configuration specifying priorities, and present formats of ontologies based on requests attributes. Request attributes may include device identifiers, device attributes of the requesting device (e.g., mobile, desktop, wearable, etc.) organization identifiers, user identifiers, as well as team identifiers of specific teams within organizations (e.g., marketing, security, sales).

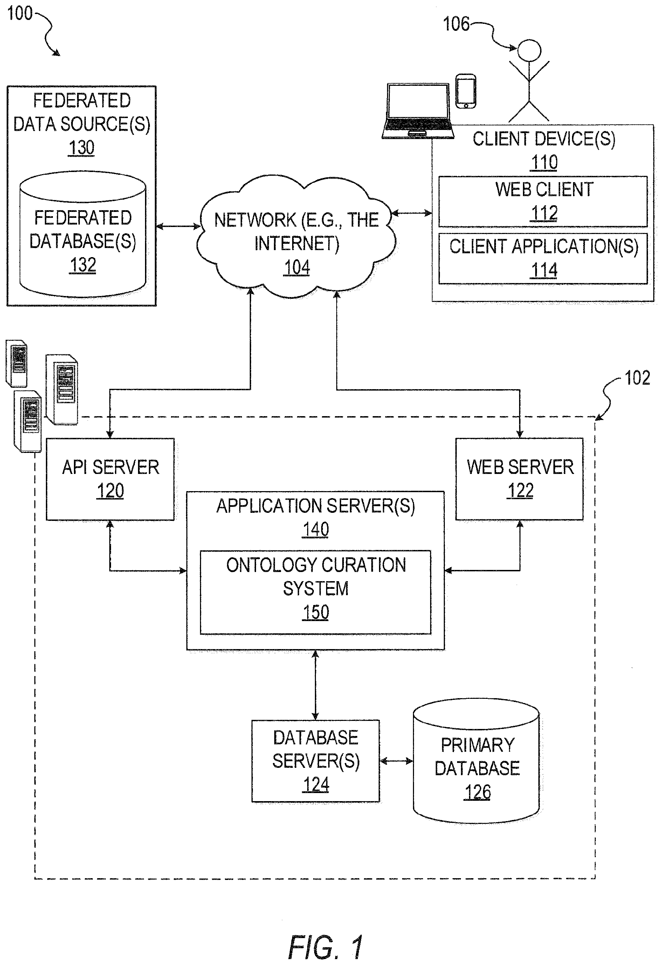

FIG. 1 is a network diagram illustrating a network environment 100 suitable for operating an ontology curation system 150. A networked system 102 provides server-side functionality, via a network 104 (e.g., an intranet, the Internet or a Wide Area Network (WAN)), to one or more clients such as the client device(s) 110. FIG. 1 illustrates a web client 112 and client application(s) 114 executing on respective client device(s) 110. The networked system 102 communicates with federated data source(s) 130, via the network 104, to request and access data stored in federated database(s) 132.

An Application Program Interface (API) server 120 and a web server 122 are coupled to, and provide programmatic and web interfaces respectively to, one or more application server(s) 140. The application servers 140 host the ontology curation system 150. The application server(s) 140 are, in turn, shown to be coupled to one or more database servers 124 that facilitate access to primary database 126.

The ontology curation system 150 curates ontologies based on input data and request attributes from requests received from client devices (e.g., client device(s) 110). For example, the ontology curation system 150 is configured to receive requests to access or view data objects from the client device(s) 110, access the primary database 126 and federated database(s) 132 to retrieve a set of data objects based on request attributes of the request, curate an ontology based on the set of data objects, and cause display of a presentation of the curated ontology at the client device(s) 110. The primary database 126 may include one or more databases.

As shown, the network environment 100 includes the client device(s) 110 in communication with the networked system 102 over the network 104. The networked system 102 communicates and exchanges data with the client device(s) 110 that pertains to various functions and aspects associated with the networked system 102 and its users. Likewise, the client device(s) 110, which may be any of a variety of types of devices that include at least a display, a processor, and communication capabilities that provide access to the network 104 (e.g., a smart phone, a tablet computer, a personal digital assistant (PDA), a personal navigation device (PND), a handheld computer, a desktop computer, a laptop or netbook, or a wearable computing device), may be operated by a user (e.g., a person) of the networked system 102 to exchange data with the networked system 102 over the network 104.

The client device(s) 110 communicates with the network 104 via a wired or wireless connection. For example, one or more portions of the network 104 may comprises an ad hoc network, an intranet, an extranet, a Virtual Private Network (VPN), a Local Area Network (LAN), a wireless LAN (WLAN), a Wide Area Network (WAN), a wireless WAN (WWAN), a Metropolitan Area Network (MAN), a portion of the Internet, a portion of the Public Switched Telephone Network (PSTN), a cellular telephone network, a wireless network, a Wireless Fidelity (Wi-Fi®) network, a Worldwide Interoperability for Microwave Access (WiMax) network, another type of network, or any suitable combination thereof.

In various embodiments, the data exchanged between the client device(s) 110 and the networked system 102 may involve user-selected functions available through one or more user interfaces (UIs). The UIs may be specifically associated with the web client 112 (e.g., a browser) or the client application 114, executing on the client device(s) 110, and in communication with the networked system 102.

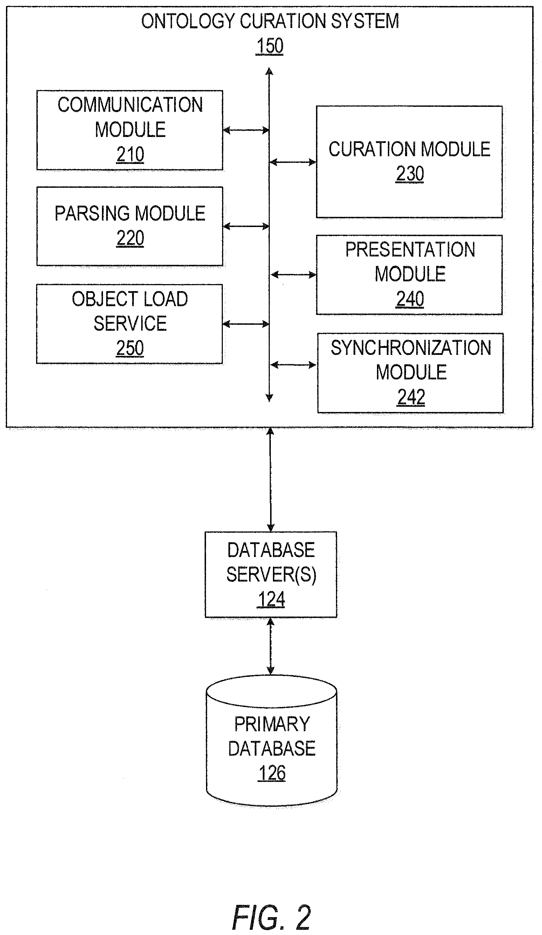

FIG. 2 is a block diagram illustrating various components of the ontology curation system 150, which are provided as part of the networked system 102, consistent with some embodiments. To avoid obscuring the inventive subject matter with unnecessary detail, various functional components (e.g., modules and engines) that are not germane to conveying an understanding of the inventive subject matter have been omitted from FIG. 2. However, a skilled artisan will readily recognize that various additional functional components may be supported by the ontology curation system 150 to facilitate additional functionality that is not specifically described herein.

As is understood by skilled artisans in the relevant computer arts, each functional component (e.g., module) illustrated in FIG. 2 may be implemented using hardware (e.g., a processor of a machine) or a combination of logic (e.g., executable software instructions) and hardware (e.g., memory and processor of a machine) for executing the logic. Furthermore, the various functional components depicted in FIG. 2 may reside on a single computer (e.g., a laptop), or may be distributed across several computers in various arrangements such as cloud-based architectures. Moreover, any two or more modules of the ontology curation system 150 may be combined into a single module, or subdivided among multiple modules. It shall be appreciated that while the functional components (e.g., modules) of FIG. 2 are discussed in the singular sense, in other embodiments, multiple instances of one or more of the modules may be employed.

The ontology curation system 150 is shown as including a communication module 210, a parsing module 220, a curation module 230, a presentation module 240, an object load service 250, and a synchronization module 242, all configured to communicate with each other and the primary database 126 (e.g., via a bus, shared memory, a switch, or application programming interfaces (APIs)) and/or federated database(s) 132 (e.g., via the network 104).

In some example embodiments, the primary database 126 is organized in an ontology and/or object model. The federated database(s) 132 may be organized in any data structure or data store for storing and/or organizing data, including but not limited to, relational databases, object-oriented databases, key-value stores and/or XML databases among others. In some example embodiments, the federated database(s) 132 may contain high-scale datasets including time series data, however the federated database(s) 132 may contain any type of data.

In some example embodiments, the application server 140 transmits requests to the ontology curation system 150, which in turn sends the request along to the database server 124. The database server 124 may then query the primary database 126. In such embodiments, the primary database 126 may employ an ontology schema and return search results based on the request received from the database server 124. The search results may for example include data objects, e.g., a string (e.g., text string) or JSON data object.

In further embodiments, the ontology curation system 150 may include a translation layer (e.g., Object Load Service 250) configured to intercept returned queries from the primary database 126 to add type, change a type, or to otherwise vary the returned query based on the custom ontology. For example, the object load service 250 may be configured to enrich the returned search results with data retrieved from another data source, such as the federated database(s) 132. The federated database(s) may maintain any type of data, such as high-scale data sets. High-scale data sets can include time series data; an IP geocoding service that includes data useable to enrich data objects (e.g., IP addresses) received from the primary database 126 with latitude/longitude coordinates; as well as a map tile database that contains map imagery depicting locations of coordinates.

In some example embodiments, the primary database 126 returns a data object in response to receiving the request from the ontology curation system 150, wherein the data object is a JSON data object that contains an identifier. The ontology curation system 150 receives the JSON object and queries the federated database(s) 132 using the identifier in the JSON data object as a query.

The communication module 210 provides functionality to communicate with client devices (e.g., client device(s) 110) in order to receive requests to view data objects. The requests may include a reference to a data object or a component of a data object, as well as attributes and properties of the requesting device (client device 110), and the requesting user (e.g., user 106). The communication module 210 communicates requests.

Object components of a data object may include object properties, object media, object notes, and object links. The object properties are structured pieces of information that define behavior and characteristics of the data object (e.g., a data type). The object media include binary attachments of data that may include images, text, video, and other specialized forms. The object notes are free text containers of information that provide details about the data object itself. The object links define connections of any one data object to one or more linked data objects. Data objects may also include metadata that defines geo-coordinates (e.g., to indicate a source location of the data object), as well as temporal data (e.g., defining a point in time in which the data object was collected). In some example embodiments, the data objects may further include an Access Control List (ACL), which is a list of Access Control Items (ACIs) Each ACI defines a level of permission that a particular user or user group is permitted to the data object. An ACL includes a set of these permissions.

The presentation module 240 generates and causes display of a presentation of the data object based on the curated ontology at the client device(s) 110. The presentation may be generated based on: the type of data to include in an object view; pre-configured presentation requirements associated with data types; as well as access credentials of a requesting user. For example, some users may have greater access privileges than other users, such that some data may not be viewable. In some example embodiments, the presentation of the data object is based on request attributes that include one or more device properties of the requesting device (e.g., client device(s) 110). For example, the presentation of the data object may differ based on the requesting device being a mobile device versus a desktop device, as both devices would receive different curated ontologies.

In some example embodiments, the presentation module 240 also determines a presentation format of each linked data object in the curated ontology based on corresponding object components. For example, a first data object may include object components indicating that the first data object can be displayed in a map image, while a second data object includes object components that indicate that the second data object must be displayed in a time series. The presentation module 240 formats the presentation of the curated ontology based on the object components.

FIG. 2 also includes a depiction of the primary database 126. In some example embodiments, the primary database 126 may receive data from a federated data source(s) 130.

While copying data from the federated data source(s) 130 to the primary database 126 can be beneficial, the process of copying and parsing the data can be expensive. Further, the copied data should be monitored to ensure that modifications to the data stored by the federated data source(s) 130 are reflected in the primary database 126. Accordingly, resource usage and latency can be reduced by minimizing the amount of data copied to the primary database 126 from the federated data source(s) 130, thereby increasing overall system performance. To this end, the ontology curation system 160 can limit copying data from the federated data source(s) 130 to an as needed or as desired basis. For example, the ontology curation system 160 can access data from the federated data source(s) 160 in response to read commands, and promote (e.g., copy, convert, transform, store) data to the ontology curation system 160 in response to write commands (e.g., modify, link, associate, annotate, or otherwise edit the data in the federated data source(s)).

For example, in response to receiving a read request from a client device 110 to view a data object, ontology curation system 160 can communicate with the federated data source(s) 130 to search for the requested data, which can be presented on the client device 110 as part of the requested data object. While the data from the federated data source(s) 130 is presented to the user as part of the data object, the data does not have be promoted to the primary database 126. However, in response to receiving a write request to write data from the federated data source 130 to a data object maintained by the ontology curation system 150, the ontology curation system 150 can promote the data from the federated data source 130 to the ontology curation system 150. Promoting data can include converting the data into a format consistent the object model utilized by the ontology curation system 150 and storing the converted data in the primary database 126.

The synchronization module 242 can communicate with the federated data source(s) 130 to ensure that data promoted to the ontology curation system 150 remains synchronized with any changes made to the corresponding data stored in a federated database 132. For example, the synchronization module 242 can periodically query the federated data source(s) 130 for any changes made to data that has been promoted to the ontology curation system 150. If any changes have been made to the data stored in the federated database 132, the synchronization module 242 can update the primary database 126 to reflect the change.

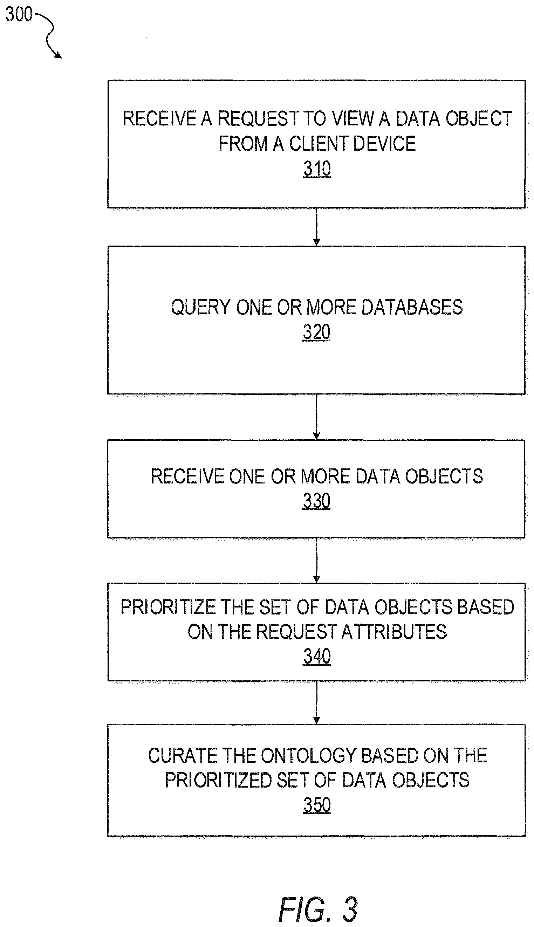

FIG. 3 is a flowchart illustrating a method 300 for curating an ontology based on a prioritized set of data objects, according to some example embodiments. The method 300 is embodied in computer-readable instructions for execution by one or more processors such that the operations of the method 300 are performed in part or in whole by the network-based ontology curation system 150; accordingly, the method 300 is described below by way of example with reference thereto. However, it shall be appreciated that at least some of the operations of the method 300 may be deployed on various other hardware configurations, and the method 300 is not intended to be limited to the network-based ontology curation system 150.

At operation 310, the communication module 210 receives a request to view or otherwise access a data object from a client device (e.g., client device(s) 110). The request may include an identifier of a data object (e.g., based on a search query, or file name). In one embodiment, the request may comprise request attributes. In another embodiment, the request attributes may include at least a user identifier or a device identifier of the client device(s) 110. The request may be to access a data object representative of a person. In some example embodiments, the request does not need to include an identifier at all, and rather, the request may simply be a search query in which search results from the primary database 126 may be used to query one or more federated database(s) 132. The system may thereby return relevant information from the primary database 126 and/or the federated database(s) 132. For example, at operation 310, the user 106 may send a request to the ontology curation system 150 for a specific data object, or to simple conduct a search based on a search query.

At operation 320, the communication module 210 queries the API server 120, the API server 120 queries the database server 124, and the database server queries the primary database 126.

The API server 120 may further query one or more federated data source(s) 130. For example, in response to the request from the user 106, the ontology curation system 150 can search the primary database 126 and/or one or more federated data source(s) 130, to retrieve a set of data objects.

At operation 330, the ontology curation system 150 receives one or more data objects, as discussed above, from the primary database 126 and/or federated data source(s) 130. The set of data objects may be linked or otherwise related to the data object based on data object components (e.g., links). Links in an ontology may be used between objects in the ontology model, and the information for the links/objects may be stored wholly within the primary database 126. Once returned, the ontology curation system 150 can analyze the requested data objects to remove any duplicate data objects.

To minimize the amount of data maintained by the ontology curation system, data objects received from the federated data source(s) 130 as a result of a read request, such as a search, may not be stored in the primary database 126. Rather, data objects may be promoted in response to a write request.

At operation 340, the curation module 230 prioritizes the set of data objects based on the request attributes of the request from the client device(s) 110. The request attributes include, for example, an identifier of the client device(s) 110, properties and characteristics of the client device(s) 110 (e.g., device type, display type, display resolution, mobile or desktop, etc.), as well as attributes of the user 106 (e.g., based on user profile data). For example, certain data objects among the set of data objects may be prioritized more highly based on the client device(s) 110 being a mobile device versus a desktop device. As discussed above, the prioritization may be based on a use case of the data object as well as the data type. In some example embodiments, client device display size may also play a role. In some example embodiments, the set of data objects are also prioritized based on user attributes from a user profile, such as title, occupation, organization role, etc.

At operation 350, the curation module 230 curates an ontology based on the prioritized set of data objects and the attributes of the request from the client device(s) 110. The curated ontology may thereby be delivered to the presentation module 240 in order to generate a presentation of the data object based on the curated ontology. The ontology consists of: a list of all object types; a list of all object properties; a list of all links between data objects; a list of all allowable property types for a given object type; as well as a list of all allowable link types for a given object type.

In some example embodiments, a default view of the ontology may be overwritten by a custom view. One such modeling may be a tree, in which there are custom views at each level, and overriding at lower levels (when there is greater specificity as to the circumstances behind the request). Advantages of such embodiments include starting with a broad base ontology (e.g., only person data objects) that may be refined based on specific use cases. For example, different person data objects (e.g., athletes, mechanics, pilots) or even further refined (for example, airplane pilots, stewards, traffic controller) if dealing with a specific use case (for example, transportation).

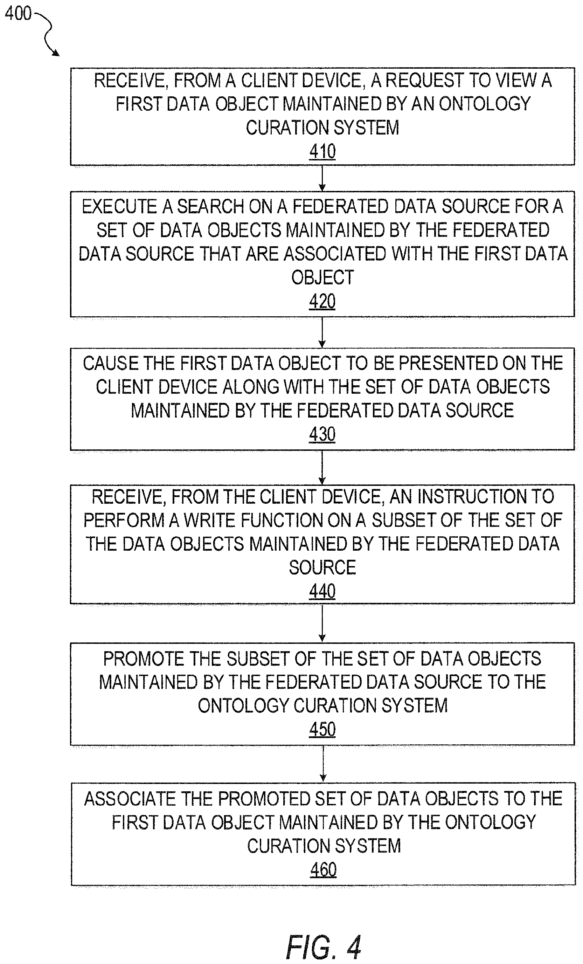

FIG. 4 is a flowchart illustrating a method 400 for promoting data from a federated data source to an ontology curation system 150, according to some example embodiments. The method 400 is embodied in computer-readable instructions for execution by one or more processors such that the operations of the method 400 are performed in part or in whole by the network-based ontology curation system 150; accordingly, the method 400 is described below by way of example with reference thereto. However, it shall be appreciated that at least some of the operations of the method 400 may be deployed on various other hardware configurations, and the method 400 is not intended to be limited to the network-based ontology curation system 150.

At operation 410, the communication module 210 receives, from a client device 110, a request to view a first data object maintained by an ontology curation system 150. The request may include an identifier of the data object (e.g., based on a search query, or file name). In one embodiment, the request may comprise request attributes. In another embodiment, the request attributes may include at least a user identifier or a device identifier of the client device 110. The request may be to access a data object representative of a person. In some example embodiments, the request does not need to include an identifier at all, and rather, the request may simply be a search query in which search results from the primary database 126 may be used to query the federated data source(s) 130. The ontology curation system 150 may thereby return relevant information from the primary database 126 and federated data source(s) 130. For example, at operation 410, the user 106 may send a request to the ontology curation system 150 for a specific data object, or to simply conduct a search based on a search query.

At operation 420, the communication module 210 executes a search on a federated data source 130 for a set of data objects maintained by the federated data source 130 that are associated with the first data object. In response to the request, the ontology curation system 150 can access the first data object from the primary database 126 and identify a search term associated with the first data object. For example, the ontology curation system 150 can search the primary database 126 based on request attributes included in the request to identify the first data object, which may contain corresponding ontology schema, as well as data attributes such as identifiers and search terms. The communication module 210 can then execute the search based on the search term. The search can be executed on one or more federated data sources 130.

In some instances, the federated data sources 130 and/or the primary database 132 may include duplicative data. For example, this can be the result of data having been promoted from a federated data source 130 to the primary database 130. Accordingly, the ontology curation system 150 can exclude and/or filter data objects that are duplicates. In one embodiment, the ontology curation system 150 may filter data objects using the identifiers for the data from the federated data source 130 and the identifiers stored in the promoted data in the primary database 130.

At operation 430, the ontology curation system 150 causes the first data object to be presented on the client device 110 along with the set of data objects maintained by the federated data source 130. For example, the curation module 230 can curate an ontology based on the data objects, the first data object and the ontology schema. The curated ontology may thereby be delivered to the presentation module 240 in order to generate a presentation of the first data object.

At operation 440, the communication module 210 receives, from the client device, an instruction to perform a write function on a subset of the set of the high-scale data objects maintained by the federated data source 130. A write function can be a function to cause data to be written to the primary databases 126. For example, a user may desire to save a portion of the data presented along with the first data object and so may utilize the client device 110 to cause a write request to be transmitted to the ontology curation system 150 to save the selected portion of the data.

As an example, the first data object may represent a person and the data objects received from the federated data source 130 may include phone records and/or purchase records associated with the person. A user of the client device 110 may determine that a particular record or set or records is of particular importance and therefore wish to write (e.g., modify, annotate) the selected records to the first data object for later use. In this type of situation, the user can use the client device 110 to transmit a write request to the ontology curation system 150 to write the selected records to the data object.

At operation 450, the ontology curation system 150 promotes the subset of the set of data objects maintained by the federated data source to the ontology curation system. For example, in response to receiving the instruction to perform the write function, the ontology curation system 150 can create a copy and/or generate a transformed version of the subset of the set of data objects. The ontology curation system can then store the subset of the set of data objects in primary database 126, thereby yielding a promoted set of data objects maintained by the ontology curation system 150.

At operation 460, the ontology curation system 150 associates the promoted set of data objects to the first data object maintained by the ontology curation system 150. For example, the parsing module can store and/or generate an identifier identifying the promoted set of data objects in the federated database 132. The parsing module 220 can then update the first data object in the primary database 126 to include the identifier.

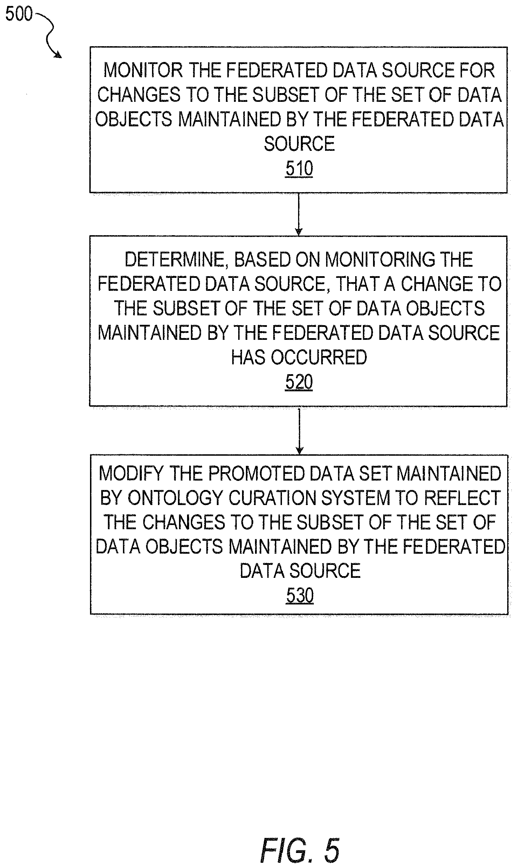

FIG. 5 is a flowchart illustrating a method 500 for synchronizing a set of data objects, consistent with some embodiments. As shown in FIG. 5, one or more operations 510, 520, and 530 may be performed after the method 400, in which the ontology curation system 150 promoting data from a federated data source to an ontology curation system, according to some example embodiments.

At operation 510, the synchronization module 242 monitors the federated data source 132 for changes to the subset of the set of data objects maintained by the federated data source 132. For example, the synchronization module 242 can periodically query the federated data source 132 for changes to the subset of the set of data objects maintained by the federated data source 132.

As another example, a user can manually cause the synchronization module 242 to query the federated data source 132 for changes to the subset of the set of data objects maintained by the federated data source 132. For example, the user can utilize the client device 110 to request that promoted data maintained by ontology curation system 150 be synchronized with its corresponding data maintained by the federated data source 132.

At operation 520, the synchronization module 242 determines, based on monitoring the federated data source 132, that a change to the subset of the set of data objects maintained by the federated data source 132 has occurred. For example, the change can be one or more data values being added, removed, and/or modified. As another example, the changes can include new data objects, entries, rows, etc., stored in the federated data source 132 that would have been previously promoted along with the promoted data.

At operation 530, the synchronization module 242 modifies the promoted data set maintained by ontology curation system 150 to reflect the changes to the subset of the set of data objects maintained by the federated data source 132. As a result, the promoted data set will remain synchronized with the subset of the set of data objects maintained by the federated data source 132.

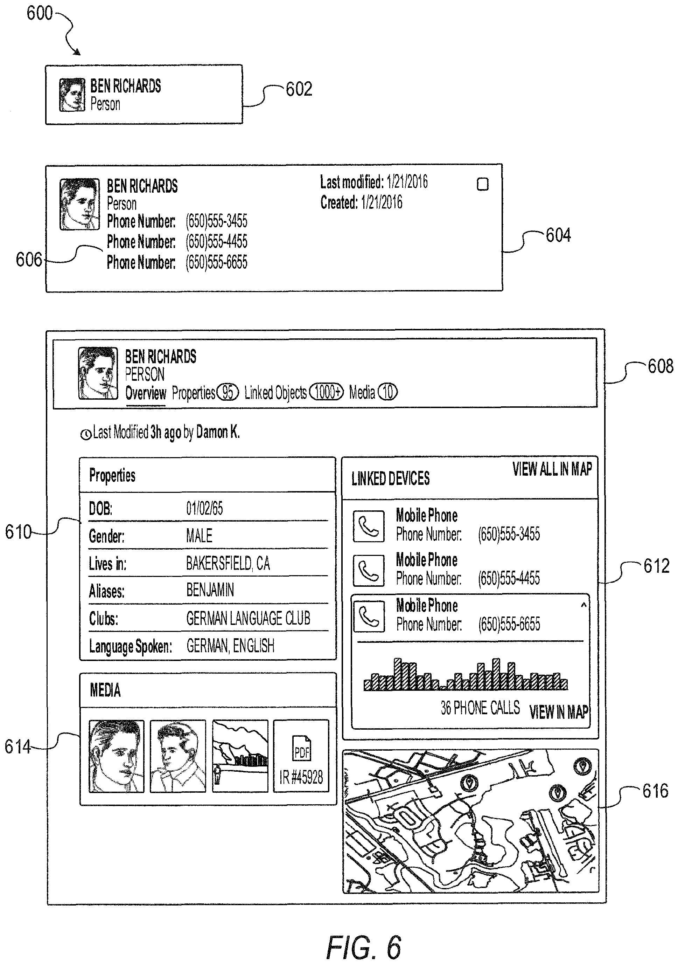

FIG. 6 is an interface diagram illustrating presentations 600 of a data object based on curated ontologies, consistent with some embodiments. FIG. 6 includes a data object 602, a first presentation of a data object 604 that includes a first curation of data objects 606, and a second presentation of the data object 608. The second presentation of the data object 608 includes a second curation of data objects 610, 612, 614, and 616.

As shown in FIG. 6, the data object 602 represents a person. The data object 602 includes object components that may include data properties, media, notes, as well as data links to other data objects within the networked system 102. Data object 602 includes an identifier (e.g., "BEN RICHARDS"), as well as information which defines a data type, a creation time of the data object 602, and in some embodiments, a user that created the data object 702 (e.g., user 106). The data object 602 also includes metadata such as geo-coordinates of the data object 602 (e.g., a location of the user 106 when the user 106 created the data object 602), as well as temporal metadata specifying a point in time in which the data object 602 was created or corresponds.

In some example embodiments, the data object 602 includes object components that define data source information of the data object 602, as well as security information associated with the data object 602. Examples of data sources include databases, spreadsheets, text documents, and individual users.

As described above in reference to the method 300, a user may provide a request to the ontology curation system 150 to access or view the data object 602. For example, the request may include a reference to an identifier of the data object 602 (e.g., "BEN RICHARDS"), or may include a selection of a graphical representation of the data object 602 displayed within a GUI displayed at the client device(s) 110. In response to receiving the request, the ontology curation system 150 curates an ontology associated with the data object 602 in order to generate and cause display of a presentation of the data object 602 at the client device(s) 110.

The ontology curated by the ontology curation system 150 may be based on request attributes of the request as well as components of the data object 602 itself. As shown in FIG. 6, the first presentation of the data object 604 includes a first curation of data objects 606. For example, the ontology curation system 150 may receive a first request from a first client device from among the client devices 110 to view the data object 602. In response to receiving the first request from the first client device, the ontology curation system 150 curates an ontology based on the request attributes that include characteristics of the first client device. The first presentation of the data object 604 may for example be generated based on user attributes of the user 106, and the first client device being identified as a mobile device, or due to the first client device having a small display screen.

The ontology curation system 150 may receive a second request to access the data object 602 from a second client device from among the client device(s) 110. The ontology curation system 150 curates a second curation of data object (e.g., data objects 610, 612, 614, and 616) based on request attributes of the second request that includes device characteristics of the second client device. For example, the ontology curation system 150 may identify that the second client device is a desktop device.

In some example embodiments, as described in FIG. 3, the ontology curation system 150 may curate the ontology based on various request attributes that include work group identifiers of the requesting user (e.g., user 106). For example, the ontology curation system 150 may determine that the first request described above is from a first work group within an organization (e.g., a secretary), whereas the second request is received from a second work group (e.g., sales).

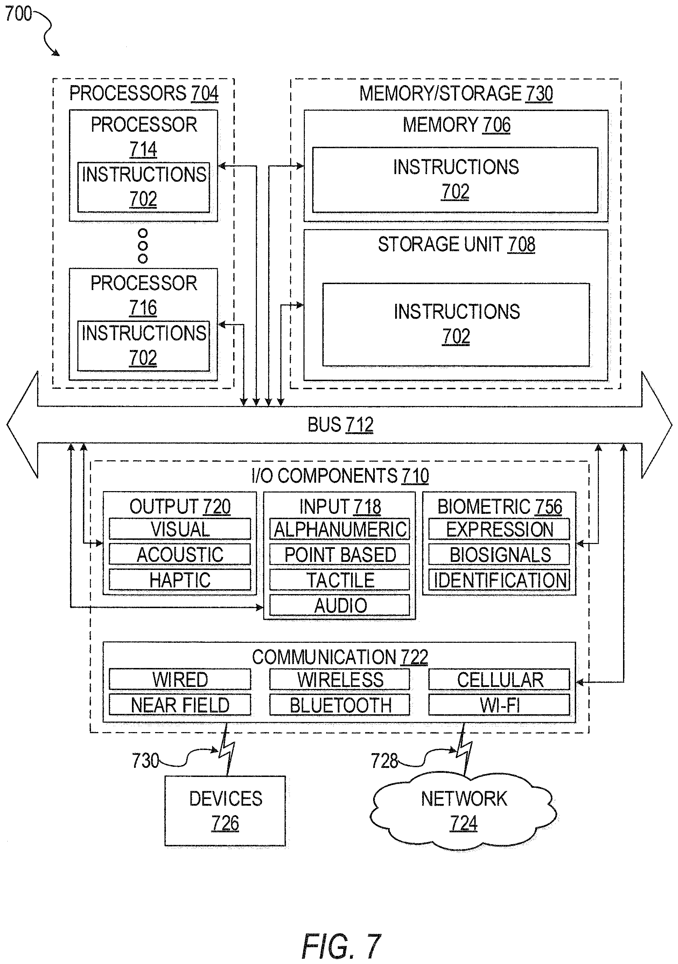

FIG. 7 is a diagrammatic representation of a machine in the example form of a computer system within which a set of instructions for causing the machine to perform any one or more of the methodologies discussed herein may be executed. Specifically, FIG. 7 shows a diagrammatic representation of the machine 700 in the example form of a system, within which instructions 702 (e.g., software, a program, an application, an applet, an app, a driver, or other executable code) for causing the machine 700 to perform any one or more of the methodologies discussed herein may be executed. For example, the instructions 702 include executable code that causes the machine 700 to execute the methods 400 and 500. In this way, these instructions 702 transform the general, non-programmed machine into a particular machine programmed to carry out the described and illustrated functions in the manner described herein. The machine 700 may operate as a standalone device or may be coupled (e.g., networked) to other machines.

By way of non-limiting example, the machine 700 may comprise or correspond to a television, a computer (e.g., a server computer, a client computer, a personal computer (PC), a tablet computer, a laptop computer, or a netbook), a set-top box (STB), a personal digital assistant (PDA), an entertainment media system (e.g., an audio/video receiver), a cellular telephone, a smart phone, a mobile device, a wearable device (e.g., a smart watch), a portable media player, or any machine capable of outputting audio signals and capable of executing the instructions 702, sequentially or otherwise, that specify actions to be taken by machine 700. Further, while only a single machine 700 is illustrated, the term "machine" shall also be taken to include a collection of machines 700 that individually or jointly execute the instructions 702 to perform any one or more of the methodologies discussed herein.

The machine 700 may include processors 704, memory 706, storage unit 708 and I/O components 710, which may be configured to communicate with each other such as via a bus 712. In an example embodiment, the processors 704 (e.g., a central processing unit (CPU), a reduced instruction set computing (RISC) processor, a complex instruction set computing (CISC) processor, a graphics processing unit (GPU), a digital signal processor (DSP), an application specific integrated circuit (ASIC), a radio-frequency integrated circuit (RFIC), another processor, or any suitable combination thereof) may include, for example, processor 714 and processor 716 that may execute instructions 702. The term "processor" is intended to include multi-core processors that may comprise two or more independent processors (sometimes referred to as "cores") that may execute instructions 702 contemporaneously. Although FIG. 7 shows multiple processors 704, the machine 700 may include a single processor with a single core, a single processor with multiple cores (e.g., a multi-core processor), multiple processors with a single core, multiple processors with multiples cores, or any combination thereof.

The memory 706 (e.g., a main memory or other memory storage) and the storage unit 708 are both accessible to the processors 704 such as via the bus 712. The memory 706 and the storage unit 708 store the instructions 702 embodying any one or more of the methodologies or functions described herein. In some embodiments, the database(s) 126 resides on the storage unit 708. The instructions 702 may also reside, completely or partially, within the memory 706, within the storage unit 708, within at least one of the processors 704 (e.g., within the processor's cache memory), or any suitable combination thereof, during execution thereof by the machine 700. Accordingly, the memory 706, the storage unit 708, and the memory of processors 704 are examples of machine-readable media.

As used herein, "machine-readable medium" means a device able to store instructions and data temporarily or permanently and may include, but is not be limited to, random-access memory (RAM), read-only memory (ROM), buffer memory, flash memory, optical media, magnetic media, cache memory, other types of storage (e.g., erasable programmable read-only memory (EEPROM)), or any suitable combination thereof. The term "machine-readable medium" should be taken to include a single medium or multiple media (e.g., a centralized or distributed database, or associated caches and servers) able to store instructions 702. The term "machine-readable medium" shall also be taken to include any medium, or combination of multiple media, that is capable of storing instructions (e.g., instructions 702) for execution by a machine (e.g., machine 700), such that the instructions, when executed by one or more processors of the machine 700 (e.g., processors 704), cause the machine 700 to perform any one or more of the methodologies described herein (e.g., methods 400 and 500). Accordingly, a "machine-readable medium" refers to a single storage apparatus or device, as well as "cloud-based" storage systems or storage networks that include multiple storage apparatus or devices. The term "machine-readable medium" excludes signals per se.

Furthermore, the "machine-readable medium" may be non-transitory in that it does not embody a propagating signal. However, labeling the tangible machine-readable medium as "non-transitory" should not be construed to mean that the medium is incapable of movement - the medium should be considered as being transportable from one real-world location to another. Additionally, since the machine-readable medium is tangible, the medium may be considered to be a machine-readable device.

The I/O components 710 may include a wide variety of components to receive input, provide output, produce output, transmit information, exchange information, capture measurements, and so on. The specific I/O components 710 that are included in a particular machine will depend on the type of machine. For example, portable machines such as mobile phones will likely include a touch input device or other such input mechanisms, while a headless server machine will likely not include such a touch input device. It will be appreciated that the I/O components 710 may include many other components that are not specifically shown in FIG. 7. The I/O components 710 are grouped according to functionality merely for simplifying the following discussion and the grouping is in no way limiting. In various example embodiments, the I/O components 710 may include input components 718 and output components 720. The input components 718 may include alphanumeric input components (e.g., a keyboard, a touch screen configured to receive alphanumeric input, a photo-optical keyboard, or other alphanumeric input components), point based input components (e.g., a mouse, a touchpad, a trackball, a joystick, a motion sensor, or other pointing instrument), tactile input components (e.g., a physical button, a touch screen that provides location and/or force of touches or touch gestures, or other tactile input components), audio input components, and the like. The output components 720 may include visual components (e.g., a display such as a plasma display panel (PDP), a light emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth.

Communication may be implemented using a wide variety of technologies. The I/O components 710 may include communication components 722 operable to couple the machine 700 to a network 724 or devices 726 via coupling 728 and coupling 730, respectively. For example, the communication components 722 may include a network interface component or other suitable device to interface with the network 724. In further examples, communication components 722 may include wired communication components, wireless communication components, cellular communication components, near field communication (NFC) components, Bluetooth® components (e.g., Bluetooth® Low Energy), Wi-Fi® components, and other communication components to provide communication via other modalities. The devices 726 may be another machine or any of a wide variety of peripheral devices (e.g., a peripheral device coupled via a Universal Serial Bus (USB)).

### MODULES, COMPONENTS AND LOGIC

Certain embodiments are described herein as including logic or a number of components, modules, or mechanisms. Modules may constitute either software modules (e.g., code embodied on a machine-readable medium or in a transmission signal) or hardware modules. A hardware module is a tangible unit capable of performing certain operations and may be configured or arranged in a certain manner. In example embodiments, one or more computer systems (e.g., a standalone, client, or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field-programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired) or temporarily configured (e.g., programmed) to operate in a certain manner and/or to perform certain operations described herein. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses that connect the hardware modules). In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods described herein may be at least partially processor-implemented. For example, at least some of the operations of a method may be performed by one or more processors or processor-implemented modules. The performance of certain of the operations may be distributed among the one or more processors, not only residing within a single machine, but deployed across a number of machines. In some example embodiments, the processor or processors may be located in a single location (e.g., within a home environment, an office environment, or a server farm), while in other embodiments the processors may be distributed across a number of locations.

The one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., APIs).

### ELECTRONIC APPARATUS AND SYSTEM

Example embodiments may be implemented in digital electronic circuitry, or in computer hardware, firmware, or software, or in combinations of them. Example embodiments may be implemented using a computer program product, for example, a computer program tangibly embodied in an information carrier, for example, in a machine-readable medium for execution by, or to control the operation of, data processing apparatus, for example, a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site, or distributed across multiple sites and interconnected by a communication network.

In example embodiments, operations may be performed by one or more programmable processors executing a computer program to perform functions by operating on input data and generating output. Method operations can also be performed by, and apparatus of example embodiments may be implemented as, special purpose logic circuitry (e.g., an FPGA or an ASIC).

The computing system can include clients and servers. A client and server are generally remote from each other and typically interact through a communication network. The relationship of client and server arises by virtue of computer programs running on the respective computers and having a client-server relationship to each other. In embodiments deploying a programmable computing system, it will be appreciated that both hardware and software architectures merit consideration. Specifically, it will be appreciated that the choice of whether to implement certain functionality in permanently configured hardware (e.g., an ASIC), in temporarily configured hardware (e.g., a combination of software and a programmable processor), or in a combination of permanently and temporarily configured hardware may be a design choice. Below are set out hardware (e.g., machine) and software architectures that may be deployed, in various example embodiments.

### LANGUAGE

Although the embodiments of the present invention have been described with reference to specific example embodiments, it will be evident that various modifications and changes may be made to these embodiments without departing from the broader scope of the inventive subject matter. Accordingly, the specification and drawings are to be regarded in an illustrative rather than a restrictive sense. The accompanying drawings that form a part hereof show, by way of illustration, and not of limitation, specific embodiments in which the subject matter may be practiced. The embodiments illustrated are described in sufficient detail to enable those skilled in the art to practice the teachings disclosed herein. Other embodiments may be used and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent, to those of skill in the art, upon reviewing the above description.

All publications, patents, and patent documents referred to in this document are incorporated by reference herein in their entirety, as though individually incorporated by reference. In the event of inconsistent usages between this document and those documents so incorporated by reference, the usage in the incorporated references should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim.

## Claims

1. A method comprising:
receiving, from a client device, a request to view a first data object maintained by an ontology curation system;
in response to receiving the request to view the first data object, executing a search on a federated data source for a set of data objects maintained by the federated data source that are associated with the first data object;
causing the first data object to be presented on the client device along with the set of data objects maintained by the federated data source;
receiving, from the client device, an instruction to perform a write function on a subset of the set of the data objects maintained by the federated data source;
in response to receiving the instruction to perform the write function, promoting the subset of the set of data objects maintained by the federated data source to the ontology curation system, yielding a promoted set of data objects maintained by the ontology curation system; and
associating the promoted set of data objects to the first data object maintained by the ontology curation system.

2. The method of claim 1, further comprising:
after promoting the subset of the set of data objects maintained by the federated data source, monitoring the federated data source for changes to the subset of the set of data objects.

3. The method of claim 2, further comprising:
determining, based on monitoring the federated data source, that a change to the subset of the set of data objects maintained by the federated data source has occurred; and
in response to determining that the change to the subset of the set of data maintained by the federated data source has occurred, modifying the promoted set of data objects maintained by the ontology curation system to reflect the change to the subset of the set of data objects maintained by the federated data source.

4. The method of claim 2 or claim 3, wherein monitoring the federated data source for changes to the subset of the set of data objects maintained by the federated data source comprises:
periodically querying the federated data source for changes to the subset of the set of data objects maintained by the federated data source.

5. The method of any of claims 1-4, wherein promoting the subset of the set of data objects maintained by the federated data source comprises:
creating a copy of the subset of the set of data objects maintained by the federated data source; and
saving the copy of the subset of the set of data objects maintained by the federated data source in a database maintained by the ontology curation system.

6. The method of any of claims 1-5, wherein executing the search on the federated data source comprises:
identifying a search term associated with the first data object; and
executing the search based on the search term.

7. The method of any of claims 1-6, wherein associating the promoted set of data objects to the first data object maintained by the ontology curation system comprises:
generating a key identifying the location of the promoted set of data objects; and
updating the first data object to include the key.

8. A ontology curation system comprising:
one or more computer processors; and
one or more computer-readable mediums storing instructions that, when executed by the one or more computer processors, cause the ontology curation system to:
receive, from a client device, a request to view a first data object maintained by the ontology curation system;
in response to receiving the request to view the first data object, execute a search on a federated data source for a set of data objects maintained by the federated data source that are associated with the first data object;
cause the first data object to be presented on the client device along with the set of data objects maintained by the federated data source;
receive, from the client device, an instruction to perform a write function on a subset of the set of the data objects maintained by the federated data source;
in response to receiving the instruction to perform the write function, promote the subset of the set of data objects maintained by the federated data source to the ontology curation system, yielding a promoted set of data objects maintained by the ontology curation system; and
associate the promoted set of data objects to the first data object maintained by the ontology curation system.

9. The ontology curation system of claim 8, wherein the instructions further cause the ontology curation system to perform operations including the operations recited in any of claims 2-7.

10. A transitory or non-transitory computer-readable medium storing instructions that, when executed by one or more computer processors of an ontology curation system, cause the ontology curation system to:
receive, from a client device, a request to view a first data object maintained by the ontology curation system;
in response to receiving the request to view the first data object, execute a search on a federated data source for a set of data objects maintained by the federated data source that are associated with the first data object;
cause the first data object to be presented on the client device along with the set of data objects maintained by the federated data source;
receive, from the client device, an instruction to perform a write function on a subset of the set of the data objects maintained by the federated data source;
in response to receiving the instruction to perform the write function, promote the subset of the set of data objects maintained by the federated data source to the ontology curation system, yielding a promoted set of data objects maintained by the ontology curation system; and
associate the promoted set of data objects to the first data object maintained by the ontology curation system.

11. The computer-readable medium of claim 10, wherein the instructions further cause the ontology curation system to perform operations including the operations recited in any of claims 2-7.
